(19) Europäisches Patentamt
European Patent Office
Office européen des brevets

(11) Veröffentlichungsnummer: **0 000 130**
**B1**

(12) **EUROPÄISCHE PATENTSCHRIFT**

(45) Veröffentlichungstag der Patentschrift: **26.08.81**

(51) Int. Cl.³: **C 01 B 33/30, B 01 D 15/04**

(21) Anmeldenummer: **78100124.3**

(22) Anmeldetag: **09.06.78**

(54) **Silikatischer Komplexbildner für Erdalkali-Ionen und Verfahren zu dessen Herstellung.**

(30) Priorität: **15.06.77 DE 2727053**

(43) Veröffentlichungstag der Anmeldung:
**10.01.79 Patentblatt 79/1**

(45) Bekanntmachung des Hinweises auf die Patenterteilung:
**26.08.81 Patentblatt 81/34**

(84) Benannte Vertragsstaaten:
**BE CH FR GB NL SE**

(56) Entgegenhaltungen:
**FR - A - 1 221 950**
**FR - A - 767 204**
**GB - A - 1 104 281**
**GB - A - 313 522**
**US - A - 2 076 443**
**US - A - 3 326 632**

(73) Patentinhaber: **SÜD-CHEMIE AG**
**Lenbachplatz 6**
**D-8000 München 2 (DE)**

(72) Erfinder: **Fahn, Rudolf, Dipl.-Chem. Dr.**
**Figurenweg 5**
**D-8051 Gammelsdorf (DE)**
Erfinder: **Fenderl, Nikolaus, Dipl.-Chem. Dr.**
**Beethovenstrasse 7**
**D-8052 Moosburg (DE)**

(74) Vertreter: **Patentanwälte Dipl.-Ing. Splanemann**
**Dipl.-Chem. Dr. B. Reitzner**
**Tal 13**
**D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 130 B1

# Silikatischer Komplexbildner für Erdalkali-Ionen und Verfahren zu dessen Herstellung

Die Erfindung betrifft einen adsorptiv wirkenden silikatischen Komplexbildner für Erdalkali-Ionen sowie ein Verfahren zu dessen Herstellung.

Es ist bekannt, daß Tonminerale aus der Montmorillonit-Beidellit-Reihe natürliche Kationenaustauscher sind und in dieser Eigenschaft Erdalkali- und Schwermetall-Ionen zu binden vermögen. Zum Beispiel hat natürlicher Bentonit ein Ionenaustauschvermögen von etwa 80 bis 100 mval/100 g. Der Ionenaustausch beruht auf einer elektronegativen Überschußladung des Schichtsilikats Montmorillonit, dem Hauptbestandteil der Bentonite. Durch den natürlichen isomorphen Ersatz in der Oktaederschicht von zum Beispiel dreiwertigen Aluminium-Ionen durch zweiwertige, meist Magnesium-Ionen, oder auch in der Tetraederschicht von vierwertigen Silicium-Ionen durch zum Beispiel dreiwertige Aluminium-Ionen, ergibt sich ein elektropositives Ladungsdefizit der Silikatlamellen, welches durch Bindung von zum Beispiel Alkali- oder Erdalkali-Ionen ausgeglichen wird.

Bei säureaktivierten Mineralen aus der Montmorillonit-Beidellit-Reihe werden Ionen der Oktaederschicht herausgelöst, wobei je nach Säurekonzentration, Temperatur, Zeit und Druck, die Menge der in Lösung gehenden Oktaederschicht-Ionen und auch der in Säure löslichen Tetraederschicht-Ionen variiert werden kann. Hierbei nehmen die spezifische Oberfläche und die Anzahl der Mikroporen zu, während das Ionenaustauschvermögen abnimmt.

Bei vielen Anwendungen ist es jedoch erwünscht, das durch die hohe spezifische Oberfläche bedingte gute Adsorptionsvermögen mit einem guten Ionenaustauschvermögen zu kombinieren. Dies gilt allgemein in denjenigen Fällen, in denen neben der Bindung von Kationen auch eine Bindung oder Adsorption von Molekülen, die unpolar oder mehr oder weniger stark polar sein können, angestrebt wird. Hierbei handelt es sich beispielsweise um Farbstoffmoleküle, gefärbte Polymerisationsprodukte, Eiweißsubstanzen sowie um Verunreinigungen in Fetten und Ölen.

Weitere Anwendungen sind Abwässer, die neben kationischen Verunreinigungen zum Beispiel auch Öle, Fette und andere Chemikalien, wie Eiweißstoffe, Phenole, Lösungsmittelreste usw. enthalten. Ähnliche Probleme treten in der Wäscherei auf, wo einerseits die als Härtebildner im Waschwasser enthaltenen Erdalkali-Ionen und andererseits die von der Wäsche abgelösten Schmutz-, Farbstoff- und Fetteilchen entfernt werden müssen.

Der Erfindung liegt die Aufgabe zugrunde, eine silikatische Stoffzusammensetzung zur Verfügung zu stellen, die einerseits ein gutes Adsorptionsvermögen und andererseits ein gutes Komplexbildungsvermögen für Erdalkali-Ionen besitzt.

Es wurde nun überraschenderweise gefunden, daß man eine derartige Stoffzusammensetzung erhält, wenn ein durch Säureaktivierung eines Minerals aus der Montmorillonit-Beidellit-Reihe erhaltenes Material mit Alkali beladen wird.

Gegenstand der Erfindung ist somit ein adsorptiv wirkender silikatischer Komplexbildner für Erdalkali-Ionen, der dadurch gekennzeichnet ist, daß er durch Beladung eines durch Säureaktivierung eines Minerals aus der Montmorillonit-Beidellit-Reihe erhaltenen Materials mit Alkali herstellbar ist.

Die Minerale aus der Montmorillonit-Beidellit-Reihe sind beispielsweise in "Ullmanns Enzyklopädie der technischen Chemie", Band 17, Seiten 593 bis 594 näher erläutert. In diese Reihe fallen der Montmorillonit (das Hauptmineral der Bentonite), der Hectorit, der Beidellit, der Saponit und der Nontronit.

Erfindungsgemäß wird bevorzugt ein säureaktivierter Bentonit als Ausgangsmaterial verwendet, der dann mit Alkali beladen wird. Die Herstellung von säureaktivierten Bentoniten ist an sich bekannt. Zur Aktivierung wird das Ausgangsmaterial vorzugsweise mit einer Mineralsäure, wie Salzsäure, Schwefelsäure oder Salpetersäure, aufgeschlossen. Auch die Verwendung von organischen Säuren, wie Essigsäure, ist möglich. Der Säureaufschluß kann in einer verdünnten Suspension oder durch Behandlung einer plastischen Tonmasse mit konzentrierter Säure erfolgen. Ferner ist es möglich, die Säureaktivierung des plastischen Tons in der Gasphase, zum Beispiel mit Chlorwasserstoff oder Schwefeldioxid, durchzuführen. Nach der Aktivierung wird das Material entweder mit Wasser oder verdünnter Säure gewaschen und getrocknet.

Erfindungsgemäß hat sich ein säureaktiviertes Material mit einem $SiO_2$-Gehalt von etwa 68 bis 74 Gew.-%, einem $Al_2O_3$($+Fe_2O_3$)-Gehalt von etwa 15 bis 20 Gew.-%, einem Erdalkali-($CaO+MgO$)-Gehalt von etwa 1 bis 4 Gew.-% und einem Alkali-($Na_2O+K_2O$)- Gehalt von etwa 1 bis 2 Gew.-%, Rest gebundenes Wasser, das eine spezifische Oberfläche von etwa 200 bis 350 $m^2/g$ hat, als besonders geeignet erwiesen. Die spezifische Oberfläche wird im allgemeinen nach der BET-Methode bestimmt.

Besonders bevorzugt geht man von einem säureaktivierten Material mit einer Teilchengröße von nicht mehr als etwa 50 $\mu m$ aus. ein derartiges Material kann beispielsweise dadurch erhalten werden, daß man die Grobanteile oberhalb 50 $\mu m$, vorzugsweise oberhalb etwa 15 bis 20 $\mu m$, durch eine Hydrozyklonbehandlung entfernt. Man kann hierbei entweder das noch nicht aktivierte Ausgangsmaterial oder aber das säureaktivierte Material der Hydrozyklonreinigung unterziehen. Vorzugsweise führt man diese Behandlung mit dem säurebehandelten Material durch, da man auf diese Weise auch bei konzentrierteren Suspensionen noch einen guten Trenneffekt erzielt. Bei den ausgeschiedenen Grobanteilen

handelt es sich üblicherweise um Quarz-, Glimmer-, Feldspat-, Pyrit- und Hämatitteilchen, die ein minimales Adsorptions- bzw. Ionenbindungsvermögen zeigen.

Bei vielen Anwendungen würden diese Grobanteile wegen ihrer größeren Härte auch stören. Beispielsweise würden sie bei einer Anwendung der Komplexbildner in der Wäscherei zu einem erhöhten Faserabrieb führen.

Zur Beladung des säureaktivierten Materials wird vorzugsweise ein Alkalihydroxid, -carbonat, -phosphat oder -borat verwendet. Die Beladung erfolgt vorzugsweise dadurch, daß das säureaktivierte Material mit der alkalischen Substanz zu einem trockenen Gemisch vereinigt wird, sie kann auch durch Behandlung in einer wäßrigen Suspension oder Paste bei etwa 25 bis 100°C erfolgen.

Unter "Beladen mit Alkali" versteht man erfindungsgemäß sowohl den Austausch der H-Ionen auf der Oberfläche und zwischen den Schichten, als auch die Reaktion mit den sauren Gruppen des säureaktivierten Materials. Ferner umfaßt dieser Begriff die adsorptive Bindung sowie die innerkristalline Einlagerung der alkalischen Substanz im Gitter des Materials.

Der erfindungsgemäße Komplexbildner kann allgemein durch die Bruttoformel.

$$(Me^{I}_{2}\,O)_x\,(Me^{II}\,O)_y\,Me^{III}_{2}\,O_3\,(SiO_2)_z$$

gekennzeichnet werden, worin die Symbole folgende Bedeutungen haben:

$Me^{I}$ = Natrium und Kalium (wobei das Verhältnis $Na_2O{:}K_2O$ vorzugsweise 10 bis 100:1 beträgt)
$Me^{II}$ = Magnesium und Calcium (wobei das Verhältnis $MgO{:}CaO$ vorzugsweise 0,5 bis 3:1 beträgt)
$Me^{III}$ = Aluminium und Eisen (wobei das Verhältnis $Al_2O_3{:}Fe_2O_3$ vorzugsweise 3 bis 6:1 beträgt).

$x$ = 1,5 bis 6, vorzugsweise 3 bis 5
$y$ = 0,2 bis 1, vorzugsweise 0,3 bis 0,5
$z$ = 6,2 bis 8, vorzugsweise 7,5 bis 8

Der Komplexbildner gemäß der Erfindung kann auch in Form einerwäßrigen Suspension vorliegen. Eine derartige Suspension enthält etwa 100 bis 200 g unlösliche Feststoffe je Liter.

Die erfindungsgemäßen Komplexbildner haben in einem pH-Bereich von etwa 9 bis 11 ein Bindevermögen für Calcium-Ionen zwischen etwa 700 und 1000 mval/100 g, wobei das Bindevermögen bei höheren Temperaturen im allgemeinen ansteigt. Das Bindevermögen der erfindungsgemäßen Komplexbildner für Calcium-Ionen ist also um etwa eine Zehnerpotenz größer als das Ionenaustauschvermögen der natürlichen Bentonite, das bei etwa 70 bis 100 mval/100 g liegt.

Die Erfindung ist anhand der nachstehenden Beispiele in nicht einschränkender Weise erläutert.

### Beispiel 1.

Bentonitischer Rohton aus den bayerischen Lagerstätten im Raum Moosburg-Mainburg-Landshut wird mit 280 bis 1680, vorzugsweise 840 mval, Mineralsäure, vorzugsweise Salzsäure, bezogen auf 100 g Trockenton, versetzt und 5 bis 10, vorzugsweise 8 Stunden auf etwa 95°C erhitzt. Die in Lösung gegangenen Anteile werden zusammen mit der restlichen Säure vom Feststoff abgetrennt. Nach dem Auswaschen des säureaktivierten Bentonits auf einen pH-Wert von 4—5 wird dieser getrocknet und gemahlen.

Der so erhaltene Feststoff wird einer Alkalibehandlung unterzogen, wobei dem Feststoff Alkaliverbindungen, wie Hydroxide oder Carbonate, vorzugsweise $Na_2CO_3$ in Mengen von etwa 20 bis 50 Gewichtsteilen je 100 Gewichtsteile Feststoff zugesetzt werden. Bei Verwendung von festen Alkaliverbindungen werden diese mit dem Feststoff vermahlen. Bei Verwendung von Lösungen der Alkaliverbindungen wird vorzugsweise eine konzentrierte Lösung in eine Paste des Feststoffes eingeknetet. Dieses Produkt wird anschließend getrocknet und gemahlen.

### Beispiel 2.

Für die Herstellung sehr feinteiliger silikatischer Komplexbildner wird der nach Beispiel 1 säureaktivierte Bentonit nach dem Erhitzen durch Hydrozyklonbehandlung von üblicherweise im Bentonit enthaltenen Begleitmineralien wie Quarz, Glimmer, Feldspat, Pyrit usw. abgetrennt. Nach Entfernung der Grobanteile wird der feinteilige Feststoff wie in Beispiel 1 aus der Suspension abgetrennt, ausgewaschen, getrocknet und gemahlen sowie einer Alkalibehandlung unterzogen. Man erhält hierbei ein Produkt, das hinsichtlich des Ca-Bindevermögens eine höhere Ergiebigkeit aufweist, da es gegenüber dem Produkt in Beispiel 1 geringere Mengen inaktiver Anteile enthält.

### Beispiel 3.

Ein ähnlich feinteiliger silikatischer Komplexbildner wie in Beispiel 2 wird erhalten, wenn der nach Beispiel 1 von der restlichen Säure abgetrennte Feststoff erneut in Wasser suspendiert (ca. 200 g/l) und einer Hydrozyklonbehandlung unterzogen wird. Der Feststoffgehalt der Hydrozyklon-Feinanteilfraktion,

deren Teilchen zu etwa 98% kleiner als 20 $\mu$m sind, wird abgetrennt, und der Feststoff wird wie in Beispiel 1 getrocknet, gemahlen und beispielsweise wie folgt alkalibehandelt:

3a : Einmahlen von 25 Gew.-% gemahlener wasserfreier Soda
3b : Einmahlen von 50 Gew.-% gemahlener wasserfreier Soda
3c : Einkneten von 20 Gew.-% NaOH in wäßriger Suspension
3d : Einkneten von 40 Gew.-% NaOH in wäßriger Suspension

zu 3c und 3d:

Die berechnete Menge NaOH wird in Form einer 20%igen Natronlauge vorgelegt. In diese Lösung wird das trockene Produkt eingeknetet. Die entstandene Paste wird bei 80°C getrocknet und anschließend vermahlen.

Anwendungsbeispiel.

200 ml Wasser mit einer Ca-Härte von 30°dh (= 300 mg CaO/Liter) werden in einem 250 ml Zentrifugenglas unter Rühren auf 90°C bzw. 65 und 40°C erwärmt. Nun werden 0,2 g des erfindungsgemäßen Produktes zugesetzt und unter Rühren vollständig dispergiert. Die Suspension wird danach mit 0,5 n-NaOH auf pH 10 eingestellt und 10 min lang gerührt. Gegebenenfalls müssen Flüssigkeitsverluste infolge Verdampfung durch Zugabe von dest. Wasser ausgeglichen werden. Anschließend wird die Lösung auf Raumtemperatur abgekühlt und zentrifugiert. Von der überstehenden klaren Lösung wird die Resthärte durch komplexometrische Ca-Bestimmung ermittelt. Das Ca-Bindevermögen der wasserfreien Aktivsubstanz wird wie folgt errechnet:

$$K = \frac{A - R}{S \times T}$$

K = Ca-Bindevermögen (mg CaO/g Aktivsubstanz)
A = Ausgangs-Konzentration des eingesetzten Hartwassers (300 mg CaO/1)
R = Restgehalt der zentrifugierten Lösung (mg CaO/1)
S = Konzentration des silikatischen Komplexbildners = 1 g/l
T = Trockensubstanzgehalt des silikatischen Komplexbildners (nach Trocknung bei 105°bis zur Gewichtskonstanz).

| Beispiele | Ca-Bindevermögen mg CaO/g Aktivsubstanz | Temp. °C |
|---|---|---|
| 3a | 271 | 90 |
| 3b | 289 | 90 |
| 3b | 274 | 65 |
| 3b | 276 | 40 |
| 3b | 259 | 20 |
| 3c | 221 | 90 |
| 3d | 249 | 90 |

**Patentansprüche:**

1. Silikatischer Komplexbildner für Erdalkali-Ionen, mit der Bruttoformel

$$(Me^{I}_2\,O)_x\,(Me^{II}\,O)_y\,Me_2^{III}\,O_3\,(SiO_2)_z$$

worin die Symbole folgende Bedeutung haben:

$Me^{I}$ = Natrium und Kalium (wobei das Verhältnis $Na_2O$:$K_2O$ vorzugsweise 10 bis 100:1 beträgt)
$Me^{II}$ = Magnesium und Calcium (wobei das Verhältnis MgO:CaO vorzugsweise 0,5 bis 3:1 beträgt)
$Me^{III}$ = Aluminium und Eisen (wobei das Verhältnis $Al_2O_3$:$Fe_2O_3$ vorzugsweise 3 bis 6:1 beträgt).

x = 1,5 bis 6, vorzugsweise 3 bis 5
y = 0,2 bis 1, vorzugsweise 0,3 bis 0,5
z = 6,2 bis 8, vorzugsweise 7,5 bis 8

hergestellt durch Beladung eines durch Säureaktivierung eines Minerals aus der Montmorillonit-Beidellit-Reihe erhaltenen Materials mit Alkali.

2. Komplexbildner nach Anspruch 1, gekennzeichnet durch die Verwendung von säureaktiviertem Bentonit als Ausgangsmaterial.

3. Komplexbildner nach einem der Ansprüche 1 bis 2 in Form einer wäßrigen Suspension mit einem Gehalt an unlöslichen Feststoffen von etwa 100 bis 200 g/Liter.

4. Verfahren zur Herstellung der Komplexbildner nach Anspruch 1, dadurch gekennzeichnet, daß man ein durch Säureaktivierung eines Minerals aus der Montmorillonit-Beidellit-Reihe erhaltenes Material mit Alkali belädt.

5. Verfahren nach Anspruch 4, dadurch gekennzeichnet, daß man säureaktivierten Bentonit als Ausgangsmaterial verwendet.

6. Verfahren nach Anspruch 4 oder 5, dadurch gekennzeichnet, daß man von einem säureaktivierten Material mit einem $SiO_2$-Gehalt von etwa 68 bis 74 Gew.-%, einem $Al_2O_3(+Fe_2O_3)$-Gehalt von etwa 15 bis 20 Gew.-%, einem Erdalkali-($CaO+MgO$)-Gehalt von etwa 1 bis 4 Gew.-% und einem Alkali ($Na_2O+K_2O$)-Gehalt von etwa 1 bis 2 Gew.-%, Rest gebundenes Wasser, das eine spezifische Oberfläche von etwa 200 bis 350 $m^2/g$ hat, ausgeht.

7. Verfahren nach einem der Ansprüche 4 bis 6, dadurch gekennzeichnet, daß man von einem säureaktivierten Material mit einer Teilchengröße von nicht mehr als etwa 50$\mu$m ausgeht.

8. Verfahren nach einem der Ansprüche 4 bis 7, dadurch gekennzeichnet, daß man von einem säurebehandelten Mineral ausgeht, bei dem die Grobanteile oberhalb etwa 15 bis 20 $\mu$m durch eine Hydrozyklonbehandlung entfernt worden sind.

9. Verfahren nach einem der Ansprüche 4 bis 8, dadurch gekennzeichnet, daß man die Beladung des säureaktivierten Materials mit einem Alkalihydroxid, -carbonat, -phosphat oder -borat durch trockenes oder nasses Vermischen durchführt.

10. Verfahren nach einem der Ansprüche 4 bis 9, dadurch gekennzeichnet, daß man die Beladung des säureaktivierten Materials in wäßriger Suspension oder als Paste bei etwa 25 bis 100°C durchführt.

**Revendications**

1. Complexant silicaté pour ions alcalino-terreux dont la formule de base est la suivante:

$$(Me_2^I\,O)_x\,(Me^{II}\,O)_y\,Me_2^{III}\,O_3\,(SiO_2)_z$$

où les symboles ont les significations qui suivent:
$Me^I$ = Sodium et potassium (le rapport $Na_2O:K_2O$ étant de préférence compris entre 10:1 et 100:1)
$Me^{II}$ = Magnésium et calcium (le rapport $MgO:CaO$ étant de préférence compris entre 0,5:1 et 3:1)
$Me^{III}$ = Aluminium et fer (le rapport $Al_2O_3$: $Fe_2O_3$ étant de préférence compris entre 3:1 et 6:1)

x = 1,5 à 6, et de préférence 3 à 6
y = 0,2 à 1 et de préférence 0,3 à 0,5
z = 6,2 à 8 et de préférence 7,5 à 8 caractérisé en ce qu'il est obtenu en fixant un matériau obtenu par activation à l'acide d'un minéral de la série montomorillonite-beidellite avec de l'alcali.

2. Complexant selon la revendication 1, caractérisé par l'utilisation de bentonite activée à l'acide pour constituer le matériau de départ.

3. Complexant selon l'une des revendications 1 ou 2, caractérisé en ce qu'il se présente sous la forme d'une suspension aqueuse contenant de 100 à 200 g/litre de produits solides insolubles.

4. Procédé de fabrication de complexant selon la revendication 1, caractérisé en ce que l'on fixe avec de l'alcali un matériau obtenu par activation à l'aide d'un minéral de la série montomorillonite-beidellite.

5. Procédé selon la revendication 4, caractérisé en ce qu'on utilise comme matériau de départ de la bentonite activée à l'acide.

6. Procédé selon la revendication 4 ou 5, caractérisé en ce que l'on part d'un matériau activé à l'acide ayant une teneur en $SiO_2$ comprise entre environ 68 et 74% en poids, une teneur en $Al_2O_3(+Fe_2O_3)$ comprise entre environ 15 et 20% en poids, une teneur en ($CaO+MgO$)-alcalino-terreux comprise entre environ 1 et 4% en poids et une teneur en ($Na_2O+K_2O$)alcalin comprise entre environ 1 et 2% en poids, le reste étant constitué par de l'eau de fixation, sa surface spécifique étant d'environ 200 à 350 $m^2/g$.

7. Procédé selon l'une quelconque des revendications 4 à 6, caractérisé en ce que l'on part d'un matériau activé à l'acide dont la grandeur des particules ne dépasse pas environ 50 um.

8. Procédé selon l'une quelconque des revendications 4 à 7, caractérisé en ce que l'on part d'un minéral traité à l'acide dont on a éliminé les particules grossières situées au-dessus de 15 à 20 um environ par un traitement avec un hydrocyclone.

9. Procédé selon l'une quelconque des revendications 4 à 8, caractérisé en ce que le traitement du matériau activé à l'acide est réalisé au moyen d'un hydroxyde, d'un carbonate, d'un phosphate ou d'un borate d'alcali par mélange à sec ou au mouillé.

10. Procédé selon l'une quelconque des revendications 4 à 8, caractérisé en ce que la fixation du matériau activé à l'acide est effectuée dans une suspension aqueuse ou sous forme d'une pâte à la température d'environ 25 à 100°C.

**Claims**

1. Siliceous complexing agent for alkaline earth ions, with the empirical formula

$$(Me^{I}_2\,O)_x\ (Me^{II}\,O)_y\ Me_2^{III}\,O_3\ (SiO_2)_z$$

in which the symbols have the following meaning:

$Me^{I}$ = sodium and potassium (in which case the ratio $Na_2O:K_2O$ is preferably 10 to 100:1)
$Me^{II}$ = magnesium and calcium (in which case the ratio MgO:Ca is preferably 0.5 to 3:1)
$Me^{III}$ = aluminium and iron (in which case the ratio $Al_2O_3:Fe_2O_3$ is preferably 3 to 6:1)

$x = 1.5$ to 6, preferably 3 to 5
$y = 0.2$ to 1, preferably 0.3 to 0.5
$z = 6.2$ to 8, preferably 7.5 to 8

produced by charging with alkali a material obtained by acid activation of a mineral from the montmorillonite/beidellite series.

2. Complexing agent according to Claim 1, characterised by the use of acid-activated bentonite as starting material.

3. Complexing agent according to Claims 1 and 2 in the form of an aqueous suspension with a content of insoluble solids of about 100 to 200 g/litre.

4. Method for the production of the complexing agent according to Claim 1, characterized in that a material obtained by acid activation of a mineral from the montmorillonite/beidellite series is charged with alkali.

5. Method according to Claim 4, characterised in that acid-activated bentonite is used as starting material.

6. Method according to Claim 4 or Claim 5, characterised in that one starts from an acid-activated material with an $SiO_2$ content of about 68 to 74% by weight, with an $Al_2O_3(+Fe_2O_3)$ content of about 15 to 20% by weight, with an alkaline earth (CaO+MgO) content of about 1 to 4% by weight and with an alkali ($Na_2O+K_2O$) content of about 1 to 2% by weight, the remainder being bound water which has a specific surface of about 200 to 350 $m^2/g$.

7. Method according to one of Claims 4 to 6, characterised in that one starts from an acid-activated material with a particle size of not more than about 50 $\mu m$.

8. Method according to one of Claims 4 to 7, characterised in that one starts from an acid-treated mineral, in which the coarse fractions above about 15 to 20 $\mu m$ have been removed by a hydrocyclone treatment.

9. Method according to one of Claims 4 to 8 characterised in that the charging of the acid-activated material with an alkali hydroxide, alkali carbonate, alkali phosphate or alkali borate is effected by dry or wet mixing.

10. Method according to one of Claims 4 to 9, characterised in that the charging of the acid-activated material is effected in aqueous suspension or as a paste at about 25 to 100°C.